# EUROPÄISCHE PATENTSCHRIFT

(11) **EP 1 961 487 B1**
(45) Veröffentlichungstag und Bekanntmachung des Hinweises auf die Patenterteilung: **04.03.2009**
(21) Anmeldenummer: 08001331.1
(22) Anmeldetag: 24.01.2008
(51) Int. Cl.: B05B 7/06, B23Q 11/10

(54) **Minimalmengen-Kühlschmiervorrichtung**
Minimum amount cool greasing system
Dispositif de graissage à froid en quantités minimales

(30) Priorität: 20.02.2007 DE 102007008227
(43) Veröffentlichungstag der Anmeldung: 27.08.2008
(73) Patentinhaber: Link, Edmar, 76228 Karlsruhe (DE)
(72) Erfinder: Link, Edmar, 76228 Karlsruhe (DE); Wendler, Thomas, 76689 Karlsdorf-Neuthard (DE)
(74) Vertreter: Liesegang, Roland

(56) Entgegenhaltungen:
- DE-C1- 3 743 968
- DE-C1- 10 222 863
- DE-U1- 9 407 742
- DE-U1- 29 724 651
- JP-A- 8 099 051
- US-A- 5 845 846
- US-A- 6 123 270

## Beschreibung

Die Erfindung betrifft eine Minimalmengen-Kühlschmiervorrichtung zum Schmieren und Kühlen an Kühlschmierorten, an denen spanende oder umformende Werkzeuge auf Werkstücke einwirken, umfassend einen Düsenkopf mit einem Düsenkern, in welchem eine Mischkammer ausgebildet ist, in die ein flüssiges Kühlschmiermittel und ein Gas unter Druck eingespeist werden, einen Düsenmund mit einer Düsenöffnung zum Abgeben eines Gemischstrahles aus flüssigem Kühlschmiermittel und Gas zu einem Kühlschmierort sowie ein Düsengehäuse enthaltend einen Mantelkanal zum Umhüllen des aus dem Düsenmund austretenden Gemischstrahles mit einem Gasmantelstrom.

Eine solche Minimalmengen-Kühlschmiervorrichtung ist aus der DE 37 43 968 C1 und der gattungsbildender DE 102 22 863 bekannt. Damit lässt sich in der Mischkammer mit dem Gasstrom innig vermischtes Kühlschmiermittel in einem gebündelten Strahl an den Kühlschmierort bringen.

Insbesondere beim Einsatz von Ölen mit hoher Viskosität wurde festgestellt, daß die Partikelgröße der Flüssigkeitsteilchen im von der Düse ausgebrachten Gemischstrahl ungleichmäßig ist. Dies hat sich insbesondere beim Besprühen von Blechen vor einer Umformung, z.B. durch Stanzen, Ziehen, Biegen, als nachteilig erwiesen. Bleche für die Herstellung von Stanz- oder Formteilen besitzen in ihrer Oberfläche feine Poren mit Abmessungen im Bereich von Mikrometern. Solche Poren gilt es vor der Verarbeitung zu Form- und Stanzteilen mit flüssigem Kühlschmiermittel (Öl) zu füllen, um auf der Blechoberfläche einen Schmierfilm gleichmäßiger minimaler Stärke zu erzeugen. Für diesen Zeck liegen optimale Partikelgrößen im Bereich zwischen 2 bis 8 µm Durchmesser. Eine gleichmäßige Flüssigkeitspartikelgröße der genannten Größenordnung ist auch beim Zerspanen von Metallen erwünscht, wo ein Trend zu kleineren Werkzeugen und höheren Drehzahlen zu beobachten ist.

Der Erfindung liegt die Aufgabe zugrunde, eine Minimalmengen-Kühlschmiervorrichtung der eingangs beschriebenen Art so auszubilden, daß in dem Gemischstrahl aus Kühlschmierflüssigkeit, wie Öl, und Gas, wie Luft, kleinste Flüssigkeitsteilchen möglichst gleichmäßiger Größe erzeugt werden.

Diese Aufgabe ist erfindungsgemäß durch Patentanspruch 1 gelöst.

Gemäß der Erfindung, ist im Düsenkanal zwischen Mischkammer und Austrittsöffnung mindestens eine Abstufung mit einer Abrißkante vorgesehen. In der Strömungstechnik ist bekannt, daß scharfe Abrißkanten Stoßwellen im strömenden Medium erzeugen. Solche Stoßwellen sind nach den Feststellungen des Erfinders in einer Gemischströmung aus Kühlschmieröl und Luft zur Erzeugung kleinster Flüssigkeitspartikel im Durchmesserbereich von 2 bis 8 µm fähig, und zwar gleichmäßig über den gesamten Querschnitt der Gemischströmung.

Eine noch wirksamere Lösung der Aufgabe der Erfindung ist in Patentanspruch 2 angegeben.

Im Betrieb einer so gestalteten Minimalmengen-Kühlschmiervorrichtung tritt der Gasmantelstrahl über eine ringförmige Austrittsöffnung an einer Stelle aus, die in Strömungsrichtung gesehen vor einer Düsenöffnung liegt, aus welcher Flüssigkeit und Gas austreten, wie dies an sich aus der DE 94 07 742 U1 bekannt ist. Es überrascht, daß dies die Bündelung des Gemischstrahles nicht beeinträchtigt, sondern vielmehr zu
einer besseren Zerstäubung des Gemischstrahles mit der Wirkung führt, daß die im austretenden Gemischstrahl enthaltenen Flüssigkeitsteilchen sehr kleine, gleichmäßige Größe erhalten.

Vorzugsweise ist die Verjüngung des Düsenmundes konisch mit einem halben Kegelwinkel im Bereich zwischen 10° und 45°.

Eine vorteilhafte Ausgestaltung der Erfindung zeichnet sich dadurch aus, daß der zwischen Düsenkern und Düsengehäuse ausgebildete ringförmige Mantelkanal zumindest in einem Endabschnitt vor der ringförmigen Austrittsöffnung für den Gasmantelstrom parallel zur Strömungsachse des Gemischstrahles verlaufend ausgebildet ist. Der parallel zur Strömungsachse aus der ringförmigen Austrittsöffnung austretende Gasmantelstrahl schmiegt sich überraschenderweise gleichwohl an die verjüngte Außenkontur des Düsenmundes an, um den austretenden Gemischstrahl gegenüber der Umgebung abzuschirmen und besser zu bündeln.

Es ist von Vorteil, wenn das Kühlschmiermittel über einen kleinste Kühlschmiermengen fördernden Dosierschlauch, wie einen Kapillarschlauch, in die Mischkammer eingeführt wird. Der Innendurchmesser des Dosier- oder Kapillarschlauchs kann in einem Bereich von 0,1 bis 1,0 mm liegen, vorzugsweise im Bereich von 0,3 bis 0,8 mm. Damit lassen sich zuverlässig Förderleistungen bis herab zu 5 ml/h (Milliliter je Stunde) realisieren, d.h. sehr kleine, exakt dosierte Flüssigkeitsmengen störungsfrei fördern, wie dies aus der EP 0 535 271 B1 bekannt ist. Dies führt zu sehr kleinen Flüssigkeitsverbräuchen, die aus Gründen der Umweltschonung und der Kostenersparnis der eingesetzten Flüssigkeit (Öle auf pflanzlicher Basis) höchst erwünscht sind.

Als vorteilhaft hat sich ferner herausgestellt, wenn mit zunehmender Nenn- Viskosität der Kühlschmierflüssigkeit eine zunehmende Anzahl von Abstufungen mit Abrißkante vorgesehen wird. Dagegen kann für ein dünnflüssiges Kühlschmiermittel eine einzige Abstufung mit Abrißkante ausreichen.

Die Durchmesserdifferenz zwischen benachbarten Abstufungen liegt zweckmäßigerweise im Bereich zwischen 0,1 bis 0,5 mm.

Vorteilhaft ist, wenn die Abstände zwischen benachbarten Abstufungen konstant gehalten sind, wobei wünschenswert ist, daß die Gesamtlänge des Düsenkanals zwischen Austrittsöffnung und Mischkammer möglichst klein bemessen wird. Mit zunehmender Anzahl der Abstufungen werden deren Abstände folglich kleiner. Diese Anzahl ist begrenzt und liegt in der Praxis zwischen 1 und 8.

Die Erfindung ist im folgenden anhand schematischer Zeichnungen an Ausführungsbeispielen mit weiteren Einzelheiten näher erläutert. Es zeigen:
- Fig.1: eine perspektivische Darstellung des Düsenkopfes einer Minimalmengen-Kühlschmiervorrichtung nach der Erfindung;
- Fig. 2: eine Seitenansicht des Düsenkopfes nach Fig. 1;
- Fig. 3: eine Stirnansicht des Düsenkopfes nach Fig. 1 in Richtung des Pfeiles III;
- Fig. 4: einen Schnitt nach der Linie IV-IV in Fig. 2;
- Fig. 5: einen Schnitt nach der Linie V-V in Fig. 3;
- Fig. 6: einen Schnitt wie in Fig. 5 mit nur zwei Abrißkanten im Düsenkanal; und
- Fig. 7: in einem Schnitt wie in Fig. 5 eine Ausführung mit nur einer Abrißkante.

Der in den Figuren gezeigt Düsenkopf einer Minimalmengen-Kühlschmiervorrichtung nach der Erfindung hat eine Düsengehäuse 2 und einen darin eingepreßten Düsenkern 4 mit einem inneren Düsenkanal 6, der in den Düsenmund 8 bis zu einer Düsenöffnung 10 ausläuft.

Der Düsenmund 8 hat eine konische Verjüngung 12, die mit einem halben Kegelwinkel zwischen 10° und 45° angeschrägt ist. Diese Verjüngung ragt über die Vorderseite des Düsengehäuses 2 hinaus nach außen.

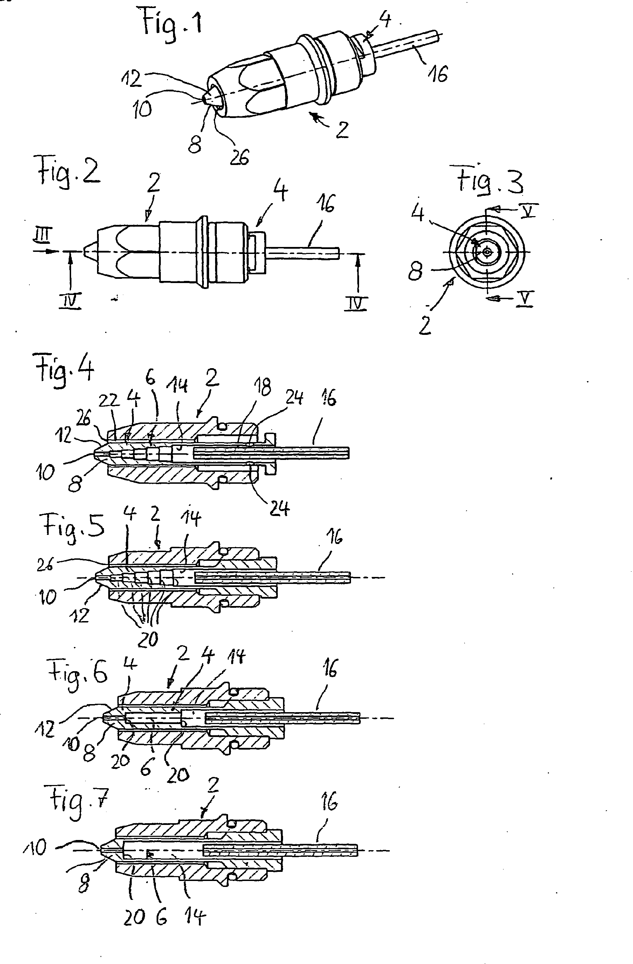

Der Düsenkanal 6 enthält eine von der Rückseite des Düsenkerns 4 eingebrachte Ansenkung großen Durchmessers, die eine Mischkammer 14 bildet. In diese Mischkammer 14 taucht ein Kapillarschlauch 16 mit Umfangsspiel 18 ein. Die Innenseite des Kapillarschlauches hat einen Durchmesser im Bereich von 0,1 bis 1,0 mm und wird je nach der Viskosität des mittels des Kapillarschlauches in den Düsenkopf unter Druck eingebrachten Schmieröles in Durchmesserabstufungen von 0,2; 0,3; 0,35; 0,45; 0,7 und 1,0 mm bereitgestellt. Durch das ringförmige Umfangsspiel 18 wird Druckluft in die Ansenkung 14 eingeführt. Wie die Figuren zeigen, verjüngt sich der Düsenkanal 6 gestuft bis zur Düsenöffnung 10. Bei den Ausführungen nach den Fig. 4 und 5 gibt es sechs Abstufungen 20. Die Abstufungen 20 haben scharfe Abrißkanten, die zur Erzeugung von Stoßwellen in dem Gemischstrom geeignet sind, der die Mischkammer 14 und den anschließenden Düsenkanal 6 mit den gezeigten Abstufungen 20 durchströmt. Die Stoßwellen schaffen gleichmäßig über die gesamten Strömungsquerschnitte verteilte kleinste Flüssigkeitspartikel mit einem Durchmesser in der Größenordnung zwischen 2 und 8 µm.

Die Anzahl der Abstufungen 20 mit scharfen Abrißkanten liegen in der Praxis zwischen 1 und 8, wobei bei Ölen mit höherer Viskosität eine größere Anzahl von Abstufungen zu wählen ist. So zeigt die Ausführung nach den Fig. 4 und 5 eine Anzahl von sechs Abstufungen 20.

Bei niedrigviskosen Ölen kann eine kleinere Anzahl von Abstufungen ausreichen. Die Fig. 6 zeigt ein Ausführungsbeispiel mit zwei Abstufungen 20. Die Fig. 7 zeigt nur eine einzige Abstufung 20 für den Einsatz von dünnflüssigem Schmieröl.

Die Abstände zwischen den einzelnen Abstufungen 20 sind, wie die Fig. 4 und 5 zeigen, gleich und werden bei gleichbleibender Länge des Düsengehäuses 2 und einer großen Anzahl von Abstufungen kleiner. Die Durchmesserdifferenz zwischen den einzelnen Abstufungen liegt je nach der gewählten Anzahl im Bereich zwischen 0,1 und 0,5 mm.

Zwischen dem Düsenkern 4 und dem Düsengehäuse 2 ist ein Mantelkanal 22 ausgebildet, in den über eine Querbohrung 24 im Bereich des Umfangspieles 18 Druckluft gespeist wird.

Der Mantelkanal 22 verläuft parallel zur Strömungsachse des Gemischstromes in der Düse und hat eine Austrittsöffnung 26, die in Strömungsrichtung gesehen vor der Düsenöffnung 10 liegt und mit dem Beginn der Verjüngung 12 des Düsenmundes 8 zusammenfällt.

Der aus der Austrittsöffnung 26 austretende Mantelstrahl schmiegt sich an die verjüngte Kontur 12 des Düsenmundes 8 an und trifft so auf den aus der Düsenöffnung 10 austretenden Gemischstrahl, um ihn abzuschirmen, so daß keine Flüssigkeitspartikel in die Umgebung gelangen können, und um zur Zerkleinerung und homogenen Durchmischung der feinen Flüssigkeitspartikel im austretenden Gemischstrahl beizutragen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 2: Düsengehäuse
- 4: Düsenkern
- 6: Düsenkanal
- 8: Düsenmund
- 10: Düsenöffnung
- 12: Verjüngung
- 14: Ansenkung/Mischkammer
- 16: Kapillarschlauch
- 18: Umfangsspiel
- 20: Abstufung mit Abrißkante
- 22: Mantelkanal
- 24: Querbohrung

## Patentansprüche

1. Minimalmengen-Kühlschmiervorrichtung zum Schmieren und Kühlen an Kühlschmierorten, an denen spanende oder umformende Werkzeuge auf Werkstücke einwirken, umfassend einen Düsenkopf mit einem Düsenkern (4), in welchem eine Mischkammer (14) ausgebildet ist, in die ein flüssiges Kühlschmiermittel und ein Gas unter Druck eingespeist werden, einen Düsenmund (8) mit einer Düsenöffnung (10) zum Abgeben eines Gemischstrahles aus flüssigem Kühlschmiermittel und Gas an einen Kühlschmierort, sowie ein Düsengehäuse (2) **dadurch gekennzeichnet, daß** das Düsengehaüse (2) einen Mantelkanal (22) zum Umhüllen des aus dem Düsenmund (8) austretenden Gemischstrahles mit einem Gasmantelstrom enthält und im Düsenkanal (6) zwischen Mischkammer (14) und Düsenöffnung (10) mindestens eine Abstufung (20) mit Abrisskante zum Erzeugen einer Stoßwelle vorgesehen ist.

2. Minimalmengen-Kühlschmiervorrichtung nach Anspruch 1, **dadurch gekennzeichnet, daß** der Düsenmund (8) zur Düsenöffnung (10) hin verjüngt ist und mit seiner Verjüngung (12) gegenüber einer ringförmigen Austrittsöffnung (26) des Mantelkanals (2)) in stromabwärtiger Richtung vorsteht.

3. Minimalmengen-Kühlschmiervorrichtung nach Anspruch 2, **dadurch gekennzeichnet, daß** die Verjüngung (12) konisch mit einem halben Kegelwinkel im Bereich zwischen 10° und 45° ausgebildet ist.

4. Minimalmengen-Kühlschmiervorrichtung nach Anspruch 2 oder 3, **dadurch gekennzeichnet, daß** der zwischen Düsenkern (4) und Düsengehäuse (2) ausgebildete ringförmige Mantelkanal (22) zumindest in einem Endabschnitt vor der kreisringförmigen Austrittsöffnung (26) für den Gasmantelstrom parallel zur Strömungsachse des Gemischstrahles verlaufend ausgebildet ist.

5. Minimalmengen-Kühlschmiervorrichtung nach einem der Ansprüche 2 bis 4, **dadurch gekennzeichnet, daß** das Kühlschmiermittel über einen Kapillarschlauch (16) in die Mischkammer (14) eingeführt wird.

6. Minimalmengen-Kühlschmiervorrichtung nach Anspruch 5, **dadurch gekennzeichnet, daß** der Innendurchmesser des Kapillarschlauches (16) im Bereich von 0,1 bis 1,0 mm liegt, vorzugsweise im Bereich von 0,3 bis 0,8 mm.

7. Minimalmengen-Kühlschmiervorrichtung nach einem der Ansprüche 1 bis 6, **dadurch gekennzeichnet, daß** mit zunehmender Nenn-Viskosität des Kühlschmiermittels eine zunehmende Anzahl von Abstufungen (20) mit Abrisskante in Reihe in dem Düsenkanal vorgesehen ist.

8. Minimalmengen-Kühlschmiervorrichtung nach einem der Ansprüche 1 bis 7, **dadurch gekennzeichnet, daß** die Durchmesser-Differenz zwischen benachbarten Abstufungen (20) 0,1 bis 0,5 mm beträgt.

9. Minimalmengen-Kühlschmiervorrichtung nach einem der Ansprüche 1 bis 8, **dadurch gekennzeichnet, daß** die Abstände zwischen benachbarten Abstufungen (20) konstant bleiben.

10. Minimalmengen-Kühlschmiervorrichtung nach einem der Ansprüche 1 bis 9, **dadurch gekennzeichnet, daß** die Gesamtlänge des Düsenkanals (6) zwischen Düsenöffnung (10) und Mischkammer (14) möglichst klein bemessen ist.

## Claims

1. A minimum quantity cooling-lubricating device for lubricating and cooling at cooling-lubricating locations where cutting or deforming tools act on workpieces, comprising a nozzle head including a nozzle core (4) inside which a mixing chamber (14) is formed into which liquid lubricant and gas under pressure are fed, further comprising a nozzle mouthpiece (8) having a nozzle aperture (10) to emit a mixed jet of liquid coolant-lubricant and gas to a cooling-lubricating location, and further comprising a nozzle casing (2), **characterized in that** the nozzle casing (2) includes a shell passage (22) for enveloping the mixed jet exiting from the nozzle mouthpiece (8) with a gas shell stream, and that at least one step (20) with a separation edge to produce a shock wave is provided in the nozzle channel (6) between the mixing chamber (14) and the nozzle aperture (10).

2. The minimum quantity cooling-lubricating device as claimed in claim 1, **characterized in that** the nozzle mouthpiece (8) tapers towards the nozzle aperture (10) and projects by its tapering portion (12) in downstream direction from an annular outlet aperture (26) of the shell passage (22).

3. The minimum quantity cooling-lubricating device as claimed in claim 2, **characterized in that** the tapering portion (12) is conical, being formed with a half angle of cone in the range of between 10° and 45°.

4. The minimum quantity cooling-lubricating device as claimed in claim 2 or 3, **characterized in that** the annular shell passage (22) formed between the nozzle core (4) and the nozzle casing (2) is configured, at least in an end section upstream of the circular outlet aperture (26) for the gas shell stream, so as to extend parallel to the axis of flow of the mixed jet.

5. The minimum quantity cooling-lubricating device as claimed in any one of claims 2 to 4, **characterized in that** the coolant-lubricant is introduced into the mixing chamber (14) through a capillary hose (16).

6. The minimum quantity cooling-lubricating device as claimed in claim 5, **characterized in that** the inner diameter of the capillary hose (16) lies in the range of from 0.1 to 1.0 mm, preferably in the range of from 0.3 to 0.8 mm.

7. The minimum quantity cooling-lubricating device as claimed in any one of claims 1 to 6, **characterized in that** the number of steps (20) with separation edges provided in series in the nozzle channel is greater as the nominal viscosity of the coolant-lubricant increases.

8. The minimum quantity cooling-lubricating device as claimed in any one of claims 1 to 7, **characterized in that** the difference in diameter between adjacent steps (20) is from 0.1 to 0.5 mm.

9. The minimum quantity cooling-lubricating device as claimed in any one of claims 1 to 8, **characterized in that** the spacings between adjacent steps (20) remain constant.

10. The minimum quantity cooling-lubricating device as claimed in any one of claims 1 to 9, **characterized in that** the total length of the nozzle channel (6) between the nozzle aperture (10) and the mixing chamber (14) is dimensioned as small as possible.

## Revendications

1. Dispositif de lubrification et de refroidissement à débit minimum, pour lubrifier et refroidir des sites de lubrification et de refroidissement par lesquels des outils d'enlèvement de matière ou de façonnage agissent sur des pièces, comprenant une tête de buse dotée d'une âme de buse (4) dans laquelle est formée une chambre de mélange (14) dans laquelle un lubrifiant liquide de refroidissement et un gaz sous pression sont injectés, une embouchure de buse (8) dotée d'une ouverture de buse (10) qui délivre un jet constitué d'un mélange de lubrifiant liquide de refroidissement et de gaz sur un site de lubrification et de refroidissement, ainsi qu'un boîtier de buse (2),
**caractérisé en ce que**
le boîtier de buse (2) contient un canal d'enveloppe (22) qui englobe le jet de mélange qui sort de l'embouchure de buse (8) par un écoulement de gaz d'enveloppe et
**en ce qu'**au moins un épaulement (20) doté d'un bord de rupture qui forme une onde de percussion est prévu dans le canal de buse (6) entre la chambre de mélange (14) et l'ouverture de buse (10).

2. Dispositif de lubrification et de refroidissement à débit minimum selon la revendication 1, **caractérisé en ce que** l'embouchure de buse (8) se rétrécit en direction de l'ouverture de buse (10) et déborde par son rétrécissement (12) par rapport à une ouverture annulaire de sortie (26) du canal d'enveloppe (2) dans la direction aval.

3. Dispositif de lubrification et de refroidissement à débit minimum selon la revendication 2, **caractérisé en ce que** le rétrécissement (12) a une configuration conique dont le demi-angle de cône est compris dans la plage de 10° à 45°.

4. Dispositif de lubrification et de refroidissement à débit minimum selon les revendications 2 ou 3, **caractérisé en ce que** le canal annulaire d'enveloppe (22) formé entre l'âme de buse (4) et le boîtier de buse (2) s'étend parallèlement à l'axe d'écoulement du jet de mélange au moins dans la partie d'extrémité située en amont de l'ouverture de sortie (26) en forme d'anneau circulaire de l'écoulement de gaz d'enveloppe.

5. Dispositif de lubrification et de refroidissement à débit minimum selon l'une des revendications 2 à 4, **caractérisé en ce que** l'agent de lubrification et de refroidissement est amené dans la chambre de mélange (14) par un tube capillaire flexible (16).

6. Dispositif de lubrification et de refroidissement à débit minimum selon la revendication 5, **caractérisé en ce que** le diamètre intérieur du tube capillaire flexible (16) est compris dans la plage de 0,1 à 1,0 mm et de préférence dans la plage de 0,3 à 0,8 mm.

7. Dispositif de lubrification et de refroidissement à débit minimum selon l'une des revendications 1 à 6, **caractérisé en ce que** le nombre des épaulements (20) à bord de rupture prévus en série dans le canal de buse augmente lorsque la viscosité nominale du lubrifiant de refroidissement augmente.

8. Dispositif de lubrification et de refroidissement à débit minimum selon l'une des revendications 1 à 7, **caractérisé en ce que** la différence de diamètre entre des épaulements voisins (20) est comprise entre 0,1 et 0, 5 mm.

9. Dispositif de lubrification et de refroidissement à débit minimum selon l'une des revendications 1 à 8, **caractérisé en ce que** la distance entre des épaulements voisins (20) est constante.

10. Dispositif de lubrification et de refroidissement à débit minimum selon l'une des revendications 1 à 9, **caractérisé en ce que** la longueur totale du canal de buse (6) entre l'ouverture de buse (10) et la chambre de mélange (14) est aussi petite que possible.
